## Europäisches Patentamt

## European Patent Office

## Office européen des brevets

(11) Veröffentlichungsnummer: **0 070 980**
**B1**

(12) **EUROPÄISCHE PATENTSCHRIFT**

(45) Veröffentlichungstag der Patentschrift:
04.12.85

(21) Anmeldenummer: 82104065.6

(22) Anmeldetag: 11.05.82

(51) Int. Cl.⁴: **G 02 B 6/24**

(54) Zwitterstecker für Lichtwellenleiterkabel.

(30) Priorität: 30.07.81 DE 3130023

(43) Veröffentlichungstag der Anmeldung:
09.02.83 Patentblatt 83/6

(45) Bekanntmachung des Hinweises auf die Patenterteilung:
04.12.85 Patentblatt 85/49

(84) Benannte Vertragsstaaten:
BE CH DE FR GB IT LI LU NL

(56) Entgegenhaltungen:
EP - A - 0 006 662
EP - A - 0 010 505
DE - A - 2 456 151
DE - A - 2 624 662
DE - A - 2 803 670
DE - B - 2 528 270
DE - B - 2 918 024
GB - A - 2 032 643
US - A - 4 166 672

(73) Patentinhaber: ANT Nachrichtentechnik GmbH,
Gerberstrasse 33, D-7150 Backnang (DE)

(72) Erfinder: Eberle, Günter, Ing.-grad.,
Wilhelm-Busch-Strasse 12/4, D-7150 Backnang (DE)

(74) Vertreter: Schickle, Gerhard, Dipl.-Ing. et al, ANT
Nachrichtentechnik GmbH Patent- und Lizenzabteilung
Gerberstrasse 33, D-7150 Backnang (DE)

BUNDESDRUCKEREI BERLIN

## Beschreibung

Die vorliegende Erfindung betrifft einen Zwitterstecker für Lichtwellenleiterkabel, dessen beide Steckerteile mit ihren optischen Bezugsflächen aneinanderstoßend zusammenkuppelbar sind, wobei auf jedem Steckerteil eine Überwurfmutter angeordnet ist, die einerseits hinter einen Ansatz an einem Steckerteil greift und andererseits mit dem gegenüberliegenden Steckerteil verschraubt wird.

Ein Zwitterstecker besteht aus zwei gleichgestalteten Steckerteilen, die beide mittels Überwurfmuttern stirnseitig zusammengepreßt werden.

Aus der unter der Nummer 0 006 662 veröffentlichten Europäischen Patentanmeldung geht ein Zwitterstecker hervor, durch den zwei Lichtwellenleiterkabel optisch miteinander verkoppelt werden. Auf jedem der beiden Steckerteile ist eine Überwurfmutter angeordnet, die hinter einen starren Ansatz am Steckerteil greift. Werden die beiden Überwurfmuttern miteinander verschraubt, so ziehen sich beide Stecker gegeneinander, wobei deren stirnseitige, optische Bezugsflächen zusammenstoßen. Damit die optische Kopplung zwischen beiden Steckerteilen eine möglichst geringe Dämpfung aufweist, ist darauf zu achten, daß beide Bezugsflächen plan aufeinander zu liegen kommen. Durch Fertigungstoleranzen oder auch Verschmutzung der Überwurfmuttergewinde bzw. aufgrund von nicht exakt gefertigten Auflagen zwischen den Überwurfmuttern und den Ansätzen an den Steckerteilen, kann sich bei der Montage eine Verwinkelung zwischen den beiden Bezugsflächen einstellen, die zu einer erhöhten Dämpfung führt.

Es sind aus den Druckschriften DE-A-2 624 662, DE-A-2 803 670, EP-A-0 010 505 und DE-B-2 528 170 Stecker für Lichtwellenleiter bekannt, bei denen die die Lichtwellenleiter aufnehmenden Stifte innerhalb der Steckerkörper mittels elastischer oder federnder Elemente schwimmend gelagert sind. Die von diesen elastischen oder federnden Elementen bewirkte gegenseitige Ausrichtung der Steckerstifte verschlechtert sich nach häufig wiederholten Steckvorgängen, weil die Kräfte der elastischen oder federnden Elemente mit der Zeit erlahmen.

Der Erfindung liegt nun die Aufgabe zugrunde, einen Zwitterstecker für Lichtwellenleiterkabel der eingangs genannten Art zu schaffen, dessen beide Steckerteile sich beim Zusammenkuppeln von selbst zueinander ausrichten, so daß deren Bezugsflächen immer plan aufeinander zu liegen kommen, und bei dem auch nach häufig wiederholten Kupplungsvorgängen eine exakte gegenseitige Ausrichtung der Steckerteile gewährleistet ist.

Erfindungsgemäß wird diese Aufgabe dadurch gelöst, daß der an jedem Steckerteil befindliche Ansatz kugelförmig abgerundet ist und daß auf diesem Ansatz ein in alle Richtungen gegenüber der Steckerteil-Längsachse neigbares Gegenstück gelagert ist, hinter das die Überwurfmutter greift.

Zweckmäßige Ausführungen der Erfindung gehen aus den Unteransprüchen hervor.

Der Vorteil der Erfindung liegt darin, daß an die Fertigungstoleranzen des Steckers keine allzu hohen Anforderungen gestellt werden müssen. Denn der Stecker ist in der Lage, selbst seine Bezugsflächen plan aufeinander auszurichten, auch wenn die Steckerkupplung mit relativ großen Toleranzen ausgelegt ist.

Anhand eines in der Zeichnung dargestellten Ausführungsbeispiels wird nun die Erfindung näher erläutert. Es zeigt

Fig. 1 einen Steckerteil mit Überwurfmutter und die

Fig. 2 bis 4 mehrere Beispiele für die Lagerung der Überwurfmutter auf dem Steckerteil.

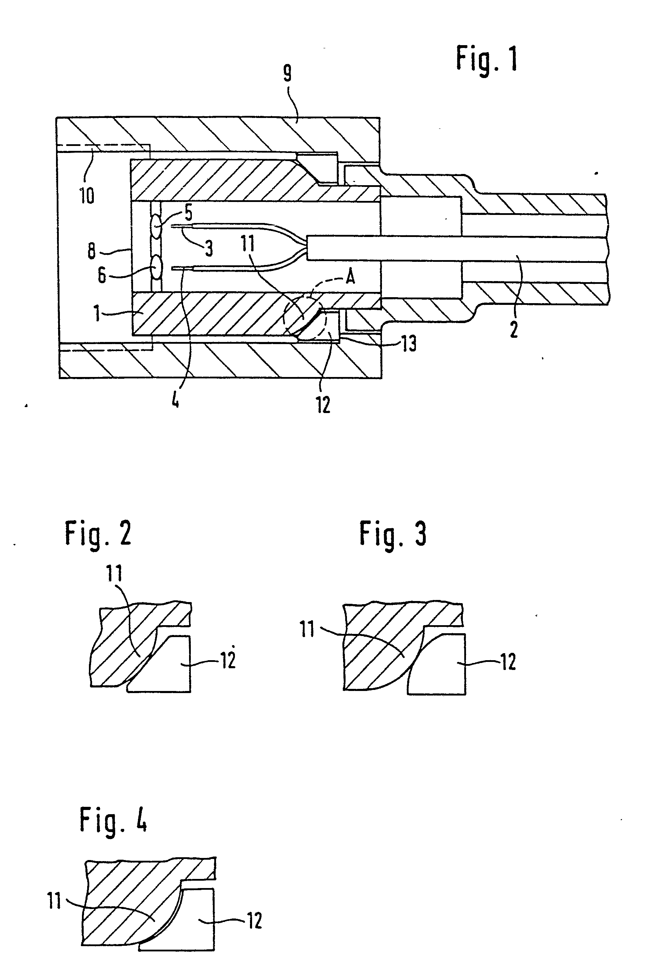

In der Fig. 1 ist einer von zwei Steckerteilen eines Zwittersteckers dargestellt. Da bei einem Zwitterstecker beide Steckerteile gleich aufgebaut sind, wird hier nur die Beschreibung eines Steckerteils vorgenommen.

In dem Steckerteil 1 ist, wie in der Zeichnung schematisch angedeutet, ein Lichtwellenleiterkabel 2 untergebracht, dessen einzelne Lichtwellenleiter 3, 4 über Linsen 5, 6 mit den Lichtwellenleitern des zweiten Steckerteils optisch gekoppelt werden. Die Bezugsfläche dieses Steckerteils ist mit 8 gekennzeichnet.

Es ist auch das Steckerprinzip verwendbar, bei dem die Stirnflächen der Lichtwellenleiter in der Bezugsfläche enden, so daß die Lichtwellenleiter beider zusammengekuppelter Steckerteile stirnseitig aufeinander stoßen.

Auf das Steckerteil ist eine Überwurfmutter 9 gesetzt, die am vorderen Teil mit einem Gewinde 10 versehen ist zur Verschraubung mit dem gegenüberliegenden Steckerteil bzw. dessen Überwurfmutter. Das Steckerteil 1 besitzt an seinem Umfang einen Ansatz 11, hinter den die Überwurfmutter 9 greift. Die Überwurfmutter ist auf dem Ansatz schwimmend gelagert, so daß sich der Steckerteil 1 gegenüber der Achse der Überwurfmutter zu allen Seiten hin neigen läßt. Diese Beweglichkeit des Steckerteils im Innern der Überwurfmutter ermöglicht es, daß beim Zusammenkuppeln der beiden Steckerteile sich diese von selbst gegenseitig so ausrichten, daß ihre Bezugsflächen stets plan aufeinanderliegen. Für eine derartige, schwimmende Lagerung ist der Ansatz 11 mit einer kugelförmigen Auflagefläche versehen. Darauf sitzt ein bewegliches Gegenstück 12, dessen auf dem Ansatz 11 aufliegende Fläche, wie ein vergrößerter Ausschnitt A in Fig. 2 zeigt, abgeschrägt ist, und zwar entsprechend der Steigung der Kugelfläche des Ansatzes 11. Die Auflagefläche des Gegenstückes 12 kann auch eine konvexe (vgl. Fig. 3) oder eine konkave Kontur (vgl. Fig. 4) besitzen.

Das soeben beschriebene Gegenstück 12 kann, wie es die Zeichnung verdeutlicht, als Ring ausgebildet sein, der auf dem Steckerteil 1 unverlierbar angeordnet ist. Gegen die rechtwinklige, rückwärtige Schulter dieses Ringes stützt sich die Überwurfmutter 9 mit einem Vorsprung 13 ab. Das Gegenstück 12 kann aber auch direkt mit der Überwurfmutter 9 verbunden sein.

## Patentansprüche

1. Zwitterstecker für Lichtwellenleiterkabel, dessen beide Steckerteile (1) mit ihren optischen Bezugsflächen (8) aneinanderstoßend zusammenkuppelbar sind, wobei auf jedem Steckerteil (1) eine Überwurfmutter (9) angeordnet ist, die einerseits hinter einen Ansatz (11) an einem Steckerteil greift und andererseits mit dem gegenüberliegenden Steckerteil verschraubt wird, dadurch gekennzeichnet, daß der an jedem Steckerteil (1) befindliche Ansatz (11) kugelförmig abgerundet ist und daß auf diesem Ansatz ein in alle Richtungen gegenüber der Steckerteil-Längsachse neigbares Gegenstück (12) gelagert ist, hinter das die Überwurfmutter (9) greift.

2. Zwitterstecker nach Anspruch 1, dadurch gekennzeichnet, daß die Fläche des Gegenstücks (12), die auf dem Ansatz (11) aufliegt, gemäß der Steigung des kugelförmigen Ansatzes abgeschrägt ist.

3. Zwitterstecker nach Anspruch 1, dadurch gekennzeichnet, daß die Fläche des Gegenstücks (12), die auf dem Ansatz (11) aufliegt, eine konvexe Kontur besitzt.

4. Zwitterstecker nach Anspruch 1, dadurch gekennzeichnet, daß die Fläche des Gegenstücks (12), welche auf dem Ansatz (11) aufliegt, eine konkave Kontur besitzt.

5. Zwitterstecker nach Anspruch 2, dadurch gekennzeichnet, daß das Gegenstück (12) an der Überwurfmutter (9) befestigt ist.

6. Zwitterstecker nach Anspruch 2, dadurch gekennzeichnet, daß das Gegenstück (12) ein auf dem Steckerteil (1) angeordneter Ring ist, gegen den sich die Überwurfmutter abstützt.

## Claims

1. Hybrid connector for optical waveguide cables, both plug parts (1) of which connector are couplable together with their optical reference surfaces (8) each abutting the other, wherein a coupling nut (9) is arranged on each plug part (1) and on the one hand engages behind a projection (11) at one plug part and is on the other hand screwed together with the plug part lying opposite, characterised thereby, that the projection (11) disposed at each plug part (1) is rounded spherically and that a counterpart (12), which is inclinable in all directions relative to the longitudinal axis of the plug part and behind which the coupling nut (9) engages, is borne on this projection.

2. Hybrid connector according to claim 1, characterised thereby, that that surface of the counterpart (12), which lies on the projection (11), is bevelled in accordance with the slope of the spherical projection.

3. Hybrid connector according to claim 1, characterised thereby, that that surface of the counterpart (12), which lies on the projection (11), possesses a convex outline.

4. Hybrid connector according to claim 1, characterised thereby, that that surface of the counterpart (12), which lies on the projection (11), possesses a concave outline.

5. Hybrid connector according to claim 2, characterised thereby, that the counterpart (12) is fastened at the coupling nut (9).

6. Hybrid connector according to claim 2, characterised thereby, that the counterpart (12) is a ring, which is arranged on the plug part (1) and against which the coupling nut bears.

## Revendications

1. Connecteur hermaphrodite pour câbles à guides d'ondes lumineuses, dont les deux demi-raccords (1) peuvent être accouplés en appui bout à bout par leurs surfaces de référence optiques (8), et dans lequel, sur chaque demi-connecteur (1), est monté un écrou de raccord (9) qui, d'un côté, est engagé derrière un épaulement (11) d'un demi-connecteur et, de l'autre côté, est assemblé par vissage au demi-connecteur opposé, caractérisé en ce que l'épaulement (11) qui se trouve sur chaque demi-connecteur (1) est arrondi avec une forme sphérique et, en ce que, sur cet épaulement, porte une contre-pièce (12) qui peut s'incliner dans tous les sens par rapport à l'axe longitudinal du demi-connecteur, et derrière laquelle est engagé l'écrou de raccord (9).

2. Connecteur hermaphrodite selon la revendication 1, caractérisé en ce que la surface de la contre-pièce (12) qui porte sur l'épaulement (11) est chanfreinée conformément à la pente de l'épaulement sphérique.

3. Demi-connecteur selon la revendication 1, caractérisé en ce que la surface de la contre-pièce (12) qui porte sur l'épaulement (11) possède un profil convexe.

4. Connecteur hermaphrodite selon la revendication 1, caractérisé en ce que la surface de la contre-pièce (12) qui porte sur l'épaulement (11) possède un profil concave.

5. Connecteur hermaphrodite selon la revendication 2, caractérisé en ce que la contre-pièce (12) est fixée à l'écrou de raccord (12).

6. Connecteur hermaphrodite selon la revendication 2, caractérisé en ce que la contre-pièce (12) est une bague montée sur le demi-connecteur (1) et contre laquelle l'écrou de raccord prend appui.

Fig. 1

Fig. 2

Fig. 3

Fig. 4